# EUROPÄISCHE PATENTSCHRIFT

(11) **EP 3 121 385 B1**
(45) Veröffentlichungstag und Bekanntmachung des Hinweises auf die Patenterteilung: **25.09.2019**
(21) Anmeldenummer: 16176172.1
(22) Anmeldetag: 24.06.2016
(51) Int. Cl.: F01D 11/00, F01D 5/22

(54) **ROTORVORRICHTUNG EINES FLUGTRIEBWERKS MIT EINER DÄMPFUNGSEINRICHTUNG ZWISCHEN LAUFSCHAUFELN**
ROTOR DEVICE OF AN AIRCRAFT ENGINE WITH DAMPING DEVICE BETWEEN ROTOR BLADES
DISPOSITIF DE ROTOR D'UN RÉACTEUR D'AVION AVEC UN DISPOSIITF D'AMORTISSEMENT ENTRE DES PALES

(30) Priorität: 24.07.2015 DE 102015112144
(43) Veröffentlichungstag der Anmeldung: 25.01.2017
(73) Patentinhaber: Rolls-Royce Deutschland Ltd & Co KG, 15827 Blankenfelde-Mahlow (DE)
(72) Erfinder: Weinert, Markus, 15834 Rangsdorf (DE); Leymann, Tobias, 14059 Berlin (DE)
(74) Vertreter: Kronthaler, Wolfgang N.K.

(56) Entgegenhaltungen:
- EP-A2- 1 867 836
- US-A- 5 302 085
- US-A1- 2010 111 700

## Beschreibung

Die Erfindung betrifft eine Rotorvorrichtung eines Flugtriebwerks mit einer Dämpfungseinrichtung zwischen Laufschaufeln eines Scheibenrads gemäß der im Patentanspruch 1 näher definierten Art.

Aus der Praxis bekannte Rotorvorrichtungen von Strahltriebwerken weisen ein Scheibenrad und einen Satz von baugleichen Laufschaufeln je Turbinenstufe auf, welche mit profilierten Schaufelfüßen in umfangsseitig an dem Scheibenrad angeordneten, vorwiegend in axialer Richtung ausgebildeten Aufnahmenuten angeordnet sind. An die Schaufelfüße der Laufschaufeln schließen sich in radialer Richtung der Rotorvorrichtung nach außen jeweils eine Schaufelplattform und ein Schaufelblatt an.

Um während eines Betriebs eines Strahltriebwerkes in den Laufschaufeln auftretende Schwingungen bzw. Vibrationen zu reduzieren, ist es bekannt, jeweils zwischen Schaufelplattformen von zwei in Umfangsrichtung der Rotorvorrichtung zueinander benachbart angeordneten Laufschaufeln unterhalb der Schaufelplattformen in dafür vorgesehenen Hohlräumen bzw. Dämpfertaschen ein Dämpferelement anzuordnen, welches über Reibung eine Dämpfung der Schaufelschwingungen erzielt. Die auch als Zwischenplattformdämpfer bezeichneten Dämpferelemente weisen in der Praxis im Querschnitt meist einen dachförmigen Bereich auf und liegen mit ihren Kontaktflächen an korrespondierenden Flächen von Ausnehmungen an zwei benachbarten Laufschaufeln an, welche die Dämpfertaschen bilden.

Bei der Montage und Demontage des Schaufelsatzes mit dem Scheibenrad ist es hierbei problematisch, dass gewöhnlich nur der gesamte Schaufelsatz spiralförmig in das Scheibenrad eingesetzt werden kann, wobei die Anordnung der Dämpferelemente in den Dämpfertaschen zwischen den Laufschaufeln schwierig ist.

Bei der Montage werden die Dämpferelemente zunächst beispielsweise über ein Fett oder einen Kleber an einer zugeordneten Laufschaufel fixiert, um ein Herabfallen der Dämpferelemente während der Montage zu verhindern. Anschließend werden die Laufschaufeln zunächst jeweils geringfügig in die zu deren Aufnahme vorgesehenen Aufnahmenuten des Scheibenrads eingeführt, so dass sie in Umfangsrichtung noch geringfügig bewegt bzw. gekippt werden können. Dabei wird jeweils die in Umfangsrichtung der Rotorvorrichtung benachbarte Laufschaufel wiederum geringfügig in die entsprechende Aufnahmeschiene des Scheibenrads eingeführt, wobei der Bewegungsspielraum der Laufschaufeln in Umfangsrichtung zueinander ausgenützt werden muss, um zu verhindern, dass das dazwischen angeordnete Dämpferelement durch die nachfolgend montierte Laufschaufel von der Laufschaufel, an der es fixiert ist, gelöst wird und herausfällt. In vergleichbarer Weise werden fortlaufend alle Laufschaufeln zunächst geringfügig in die jeweilige Aufnahmenut des Scheibenrads eingeführt und anschließend in einer spiralförmigen Bewegung komplett in die jeweilige Aufnahmeschiene bzw. Scheibennut eingebracht.

Insbesondere bei Schaufeln ohne Deckbandsegment kann die axiale Bewegung einzelner Schaufeln realisiert werden, sofern die Zwischenplattformdämfungselemente dies nicht einschränken. Dies erfordert eine spezielle Montage bzw. Demontage mit speziellem Werkzeug und gestattet nicht den Austausch einzelner Laufschaufeln ohne Demontage des gesamten Schaufelsatzes. Da die Montage bzw. Demontage mitunter mehrfach auszuführen ist zum Beispiel zum Auswuchten, ist der Ein- bzw. Ausbau der Laufschaufeln nachteilhafterweise sehr zeitaufwendig.

Neben dem hohen Zeitaufwand und dem zusätzlich benötigten Werkzeug sind weiterhin Fett- oder Kleberrückstände nachteilhaft, da diese zur Reduktion der Schaufel- und evtl. auch der Scheibenlebensdauer beitragen können.

Aus der US 2010/111700 A1 ist ein Gasturbinentriebwerk mit einer Turbinenschaufel bekannt, wobei die Turbinenschaufel eine Seitentasche in einer Turbinenplattform aufweist, die zur vollständigen Aufnahme einer beweglichen Dichtung zwischen einer vorderen Wand der Seitentasche und einer hinteren Wand der Seitentasche ausgeführt ist. Es ist weiterhin ein Dämpfer vorgesehen, der in einer in radialer Richtung des Gasturbinentriebwerks unterhalb der Seitentasche mit der Dichtung angeordneten Dämpferkammer ist.

Der vorliegenden Erfindung liegt die Aufgabe zugrunde, eine Rotorvorrichtung eines Flugtriebwerks mit einer Dämpfungseinrichtung zwischen Laufschaufeln zur Verfügung zu stellen, welche gegenüber bekannten Rotorvorrichtungen einfacher und schneller montierbar bzw. demontierbar ist und hinsichtlich der Dämpfungswirkung optimiert ist.

Erfindungsgemäß wird diese Aufgabe mit einer Rotorvorrichtung mit den Merkmalen des Patentanspruches 1 gelöst.

Dieser betrifft eine Rotorvorrichtung eines Flugtriebwerks mit einem Scheibenrad und wenigstens zwei hieran angeordneten, aneinander grenzenden Laufschaufeln, und mit wenigstens einer Dämpfungseinrichtung, die im Betrieb in radialer Richtung und zumindest bereichsweise in Umfangsrichtung der Rotorvorrichtung unterhalb einer Schaufelplattform der Laufschaufeln und innerhalb eines Hohlraums zwischen den Laufschaufeln angeordnet ist, wobei der Hohlraum durch jeweils eine Ausnehmung an den angrenzenden Laufschaufeln gebildet ist, wobei jede der Ausnehmungen eine in radialer Richtung der Rotorvorrichtung äußere Führungsfläche aufweist, mit denen die Dämpfungseinrichtung im Betrieb der Rotorvorrichtung zusammenwirkt, wobei die jeweilige Führungsfläche ausgehend von einem in Umfangsrichtung der Rotorvorrichtung seitlichen Randbereich der Laufschaufel hin zu einem mittigen Bereich der Laufschaufel einen Verlauf radial in Richtung des Scheibenrades aufweist, und wobei sich die jeweilige Ausnehmung in Umfangsrichtung der Rotorvorrichtung von einer durch den seitlichen Randbereich der Laufschaufel definierten Begrenzungsebene bis zu einer die Führungsfläche zur Laufschaufelmitte hin begrenzenden Seitenfläche erstreckt.

Es wird vorgeschlagen, dass die von der Führungsfläche, der Begrenzungsebene und der Seitenfläche begrenzte Ausnehmung wenigstens einer der aneinander grenzenden Laufschaufeln zur vollständigen Aufnahme der Dämpfungseinrichtung ausgeführt ist. Zudem weist die Dämpfungseinrichtung im Querschnitt in Umfangsrichtung der Rotorvorrichtung betrachtet einen dachartigen bzw. dachförmigen Bereich mit zwei Wirkflächen auf, von denen jeweils eine Wirkfläche im Betrieb der Rotorvorrichtung mit einer der Führungsflächen der Laufschaufeln zusammenwirkt. Zwischen der Wirkfläche der Dämpfungseinrichtung und der jeweiligen Führungsfläche der Ausnehmung liegt damit im Betrieb der Rotorvorrichtung im Querschnitt ein Linienkontakt und insgesamt ein Flächenkontakt vor, wobei hierdurch eine Dämpfungswirkung optimiert ist.

Eine derart ausgeführte Rotorvorrichtung ist gegenüber bekannten Rotorvorrichtungen einfach und schnell zu montieren bzw. zu demontieren, beispielsweise auch während des Auswuchtverfahrens. Die Vereinfachung der Montage bzw. Demontage wird insbesondere dadurch erzielt, dass die Dämpfungseinrichtung temporär während der Montage bzw. Demontage in radialer Richtung der Rotorvorrichtung vollständig innerhalb der die Dämpfertasche bildenden Ausnehmung einer der Laufschaufeln unterhalb der Schaufelplattform angeordnet werden kann.

Die Ausnehmung an einer von zwei benachbarten Laufschaufeln zur Aufnahme der Dämpfungseinrichtung während der Montage weist folglich in Umfangsrichtung der Rotorvorrichtung eine Breite auf, die größer oder gleich einer Breite der Dämpfungseinrichtung in Umfangsrichtung der Rotorvorrichtung in diesem Querschnitt ist, wobei die Ausnehmung vorzugsweise um gewünschte Toleranzen breiter als die Dämpfungseinrichtung ist.

Somit kommen auf der je nach Design der Laufschaufel konkaven oder konvexen Seite in Umfangsrichtung tiefere Dämpfertaschen zum Einsatz, die es erlauben, dass die Dämpfungseinrichtung während der Montage vollständig oder fast vollständig in der zugeordneten Ausnehmung der Laufschaufel versenkt wird, sodass die einzelnen Laufschaufeln der Rotorvorrichtung Stück für Stück in die passende Aufnahmenut des Scheibenrads geschoben werden können, ohne das die Dämpfereinrichtung sich dabei verkeilen oder verklemmen kann. Anschließend können die Dämpfereinrichtungen bei Bedarf in eine mittige Position gerückt werden. Während des Betriebs zentrieren sich die Dämpfereinrichtungen aufgrund der Zentrifugalkraft vorteilhafterweise selbstständig zwischen den Turbinenlaufschaufeln.

Durch die vorgeschlagene Gestaltung kann der Montageablauf zeitlich verkürzt werden und es ist auch kein zusätzliches komplexeres Montagewerkzeug nötig, um die Dämpfereinrichtungen zwischen den einzelnen Laufschaufeln montieren zu können.

Weiterhin hat die vorgeschlagene Gestaltung den Vorteil, dass aufwendigere Formen von Dämpferelementen möglich sind. Damit kann zum Beispiel je nach gewähltem Design das sekundär Luftsystem sowie die Schaufelplattformkühlungseffizienz verbessert werden.

Die vorgeschlagene Gestaltung der Ausnehmungen an den Laufschaufeln führt schließlich auch zu einer vorteilhaften Gewichtsreduzierung der Laufschaufeln.

Bei einer vorteilhaften Ausführung einer erfindungsgemäßen Rotorvorrichtung kann eine Sicherungseinrichtung vorgesehen sein, welche in montiertem Zustand der Dämpfungseinrichtung zumindest bereichsweise in radialer Richtung der Rotorvorrichtung betrachtet unterhalb der Dämpfungseinrichtung angeordnet ist. Durch die Sicherungseinrichtung wird die Ausnehmung zumindest bereichsweise in radialer Richtung der Rotorvorrichtung nach innen begrenzt. Die Sicherungseinrichtung bildet hierbei eine Auflagefläche für die Dämpfungseinrichtung und schränkt den Bewegungsraum der Dämpfungseinrichtung in radialer Richtung der Rotorvorrichtung nach innen zumindest bereichsweise ein, so dass verhindert wird, dass sich die Dämpfungseinrichtung in der Ausnehmung in unerwünschter Weise bewegt oder herausfällt.

Durch das Vorsehen der Sicherungseinrichtung ist vorteilhafterweise auch kein Klebstoff oder Fett zur Fixierung der Dämpfereinrichtungen an den zugeordneten Laufschaufeln während der Montage nötig, womit ein negativer Einfluss von Kleber- oder Fettrückständen auf die Lebensdauer des Schaufelmaterials vermieden wird.

Vorzugsweise weist die Sicherungseinrichtung zwei Sicherungselemente auf, von denen eines in axialer Richtung der Rotorvorrichtung in einem vorderen Bereich der Laufschaufel und eines in axialer Richtung der Rotorvorrichtung in einem hinteren Bereich der Laufschaufel angeordnet ist.

Bei einer besonders einfachen Ausführung der Erfindung ist zumindest ein Teil der Sicherungseinrichtung durch eine der Laufschaufeln gebildet. Alternativ oder zusätzlich hierzu kann es aber auch vorgesehen sein, dass zumindest ein Teil der Sicherungseinrichtung eines separaten Bauteils ist, das mit einer der Laufschaufeln in Wirkverbindung bringbar ist.

Die Ausnehmung der Laufschaufel weist insbesondere in axialer Richtung der Rotorvorrichtung eine im Wesentlichen der axialen Erstreckung der Dämpfungseinrichtung entsprechende Länge auf, wobei die Ausnehmung insbesondere in axialer Richtung der Rotorvorrichtung jeweils von einem Wandbereich der Laufschaufel begrenzt sein kann. Über eine entsprechende Anordnung der Wandbereiche ist eine Position der Dämpfungseinrichtung innerhalb der Ausnehmung in axialer Richtung der Rotorvorrichtung auf einfache Weise definierbar, so dass ein gewünschter Dämpfungseffekt und/oder Abdichtungseffekt erzielt werden kann.

Es hat sich in Versuchen hinsichtlich der Dämpf- und/oder Dichtwirkung der Dämpfungseinrichtung als vorteilhaft erwiesen, wenn die Wirkflächen der Dämpfungseinrichtung im Querschnitt einen Winkel von etwa 120° miteinander einschließen. Andere Gestaltungsformen des Dämpfungseinrichtungsquerschnittes sind je nach Anwendungserfordernissen möglich.

Es hat sich in Versuchen auch gezeigt, dass eine gute Dämpfung und eine Abdichtung durch die Dämpfungseinrichtung erzielbar ist, wenn die Führungsfläche in einem Schnitt in Umfangsrichtung der Rotorvorrichtung betrachtet gerade ausgeführt ist, wobei die Führungsfläche im Schnitt mit einer Tangente zur Umfangsrichtung der Rotorvorrichtung einen Winkel von vorzugsweise etwa 30° einschließen kann.

Wenn die Führungsfläche der Ausnehmung der Laufschaufel in einem ersten in axialer Richtung der Rotorvorrichtung weisenden Endbereich eine größere radiale Erstreckung als in einem dem ersten Endbereich gegenüberliegenden zweiten Endbereich aufweist, kann auf einfache Weise sichergestellt werden, dass die Dämpfungseinrichtung im Betrieb der Rotorvorrichtung in Richtung des Endbereichs bewegt wird, in dem die Führungsfläche die größere radiale Erstreckung aufweist. Eine Abdichtung in diesem Endbereich kann hierdurch auf einfache Weise verbessert werden.

Bei einer vorteilhaften Ausführung der erfindungsgemäßen Rotorvorrichtung kann es sowohl vorgesehen sein, dass die Führungsfläche der Ausnehmung der Laufschaufel und/oder die Dämpfungseinrichtung in axialer Richtung der Rotorvorrichtung gerade als auch gekrümmt ausgeführt ist. Die Dämpfungseinrichtung ist hinsichtlich ihrer Formgebung flexibel gestaltbar, so dass die Dämpfungseinrichtung auf einfache Weise entsprechend der zu erfüllenden Anforderungen ausgeführt werden kann.

Eine Breite der Dämpfungseinrichtung und/oder eine Breite der Ausnehmung können in Umfangsrichtung der Rotorvorrichtung betrachtet in axialer Richtung der Rotorvorrichtung im Wesentlichen konstant sein oder variieren. Dies hat den Vorteil, dass bei der erfindungsgemäßen Rotorvorrichtung sowohl einfach ausgeführte als auch komplex ausgebildete Dämpfungseinrichtungen eingesetzt werden können.

Weiterhin kann es vorgesehen sein, dass wenigstens eine Seitenfläche der Dämpfungseinrichtung und/oder die Seitenfläche der Ausnehmung bezüglich der axialen Richtung der Rotorvorrichtung gerade oder gekrümmt ausgeführt ist, wodurch wiederum eine große Freiheit in der Gestaltung der Dämpfungseinrichtung erzielt ist. Die jeweiligen Seitenflächen können dabei beispielsweise S-förmig oder parabelförmig gekrümmt sein, wobei die Krümmung der jeweiligen Seitenfläche in axialer Richtung der Rotorvorrichtung betrachtet in radialer Richtung und/oder in Umfangsrichtung der Rotorvorrichtung vorgesehen sein kann.

Wenn die Seitenfläche bzw. Seitenwand der Ausnehmung der Laufschaufel in axialer Richtung der Rotorvorrichtung wenigstens annähernd der Form einer im Betrieb dieser zugewandten Seitenfläche der Dämpfungseinrichtung entspricht, ist im Betrieb der Rotorvorrichtung ein Abstand zwischen der Dämpfungseinrichtung der Seitenwand der Ausnehmung in axialer Richtung der Rotorvorrichtung im Wesentlichen konstant.

Die erfindungsgemäße Rotorvorrichtung kann in beliebigen Bereichen von Triebwerken eingesetzt werden, wobei die Rotorvorrichtung vorzugsweise Teil einer beliebigen Stufe einer Turbine des Triebwerks ist.

Sowohl die in den Patentansprüchen angegebenen Merkmale als auch die in dem nachfolgenden Ausführungsbeispiel der erfindungsgemäßen Rotorvorrichtung angegebenen Merkmale sind jeweils für sich alleine oder in beliebiger Kombination miteinander geeignet, den erfindungsgemäßen Gegenstand weiterzubilden.

Weitere Vorteile und vorteilhafte Ausführungsformen einer erfindungsgemäßen Rotorvorrichtung ergeben sich aus den Patentansprüchen und den nachfolgend unter Bezugnahme auf die in der Zeichnung prinzipmäßig beschriebenen Ausführungsbeispiele, wobei zugunsten der Übersichtlichkeit jeweils für bau- und funktionsgleiche Bauteile dieselben Bezugszeichen verwendet werden.

Es zeigt:
- Fig. 1: eine stark schematisierte Längsschnittansicht eines Strahltriebwerkes, welches eine Turbine mit mehreren Rotorvorrichtungen aufweist;
- Fig. 2: eine vereinfachte Vorderansicht einer Rotorvorrichtung gemäß Fig. 1 in Alleinstellung, wobei ein Scheibenrad mit zwei daran angeordneten Laufschaufeln und eine mit zwei benachbarten Laufschaufeln zusammenwirkende Dämpfungseinrichtung ersichtlich sind;
- Fig. 3: eine vereinfachte Darstellung eines Schnittes durch die Rotorvorrichtung gemäß Fig. 2, wobei die Dämpfungseinrichtung in einer Montageposition zur Montage der Laufschaufeln an dem Scheibenrad gezeigt ist;
- Fig.4: eine der Fig. 3 entsprechende Schnittdarstellung der Rotorvorrichtung, wobei die Dämpfungseinrichtung in einer Position während eines Betriebs der Rotorvorrichtung bzw. des Strahltriebwerks gezeigt ist;
- Fig. 5: eine vereinfachte Seitenansicht eines Ausschnitts einer alternativ ausgeführten Laufschaufel in Alleinstellung, wobei eine zur Anordnung einer Dämpfungseinrichtung und zur Bildung einer Dämpfertasche vorgesehene Ausnehmung ersichtlich ist;
- Fig. 6: eine der Fig. 5 entsprechende Ansicht der Laufschaufel mit einer in der Ausnehmung angeordneten Dämpfungseinrichtung, wobei die Dämpfungseinrichtung in einer Position gezeigt ist, die sie während der Montage der Laufschaufeln an einem Scheibenrad einnimmt;
- Fig. 7: eine vereinfachte Schnittdarstellung eines Ausschnitts von zwei an dem Scheibenrad angeordneten Laufschaufeln, wobei die Dämpfungseinrichtung in der Montageposition gezeigt ist; und
- Fig. 8: eine der Fig. 7 entsprechende Darstellung der Laufschaufeln, wobei die Dämpfungseinrichtung in einer Position während eines Betriebs der Rotorvorrichtung gezeigt ist.

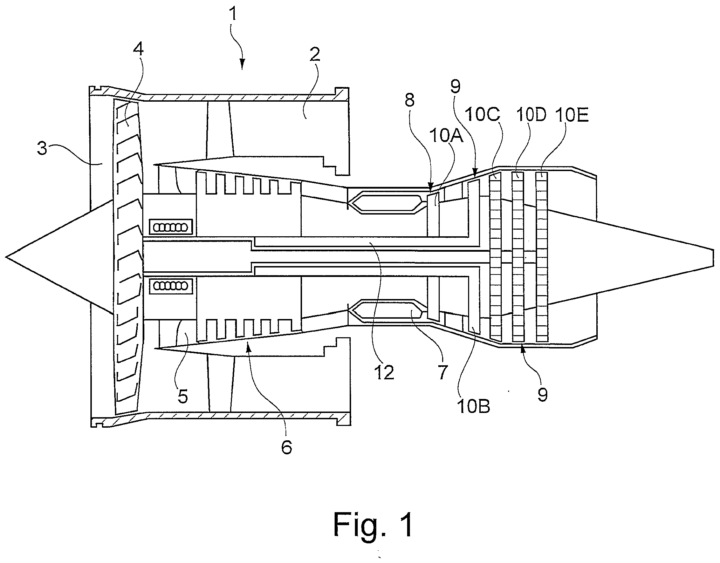

Fig. 1 zeigt ein Flugtriebwerk bzw. Strahltriebwerk 1 in einer Längsschnittansicht, wobei das Strahltriebwerk 1 mit einem Nebenstromkanal 2 und einem Einlaufbereich 3 ausgebildet ist. Stromab an den Einlaufbereich 3 schließt sich ein Bläser bzw. Fan 4 in an sich bekannter Art und Weise an. Wiederum stromab des Bläsers 4 teilt sich der Fluidstrom im Strahltriebwerk 1 in einen Nebenstrom und einen Kernstrom auf, wobei der Nebenstrom durch den Nebenstromkanal 2 und der Kernstrom in einen Triebwerkskern 5 strömt, der wiederum in an sich bekannter Art und Weise mit einer Verdichtereinrichtung 6, einem Brenner 7, einer Hochdruckturbine 8 und einer Niederdruckturbine 9 ausgeführt ist.

Die hier als zweistufige axial-Hochdruckturbine 8 und dreistufige axial-Niederdruckturbine 9 ausgebildete Gesamtturbine ist vorliegend mehrstufig mit im Wesentlichen vergleichbar aufgebauten Rotorvorrichtungen 10A, 10B, 10C, 10D, 10E.

Hiervon abweichend kann die Turbine aber prinzipiell eine beliebige andere Anzahl an Rotorvorrichtungen aufweisen. Es kann neben der gezeigten Ausführung mit zwei Wellen auch ein Triebwerk mit drei Wellen vorgesehen sein, welches sowohl eine Niederdruckturbine als auch eine Mittel- und Hochdruckturbine aufweist.

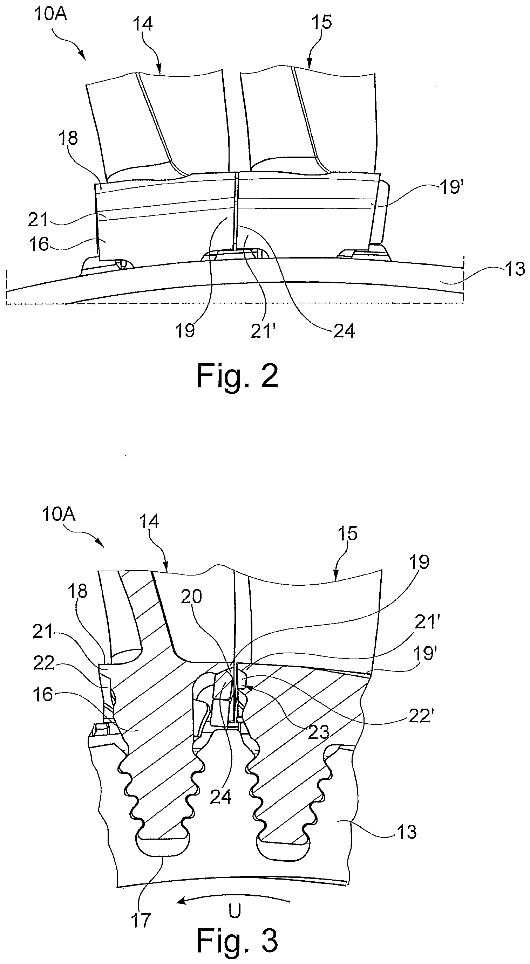

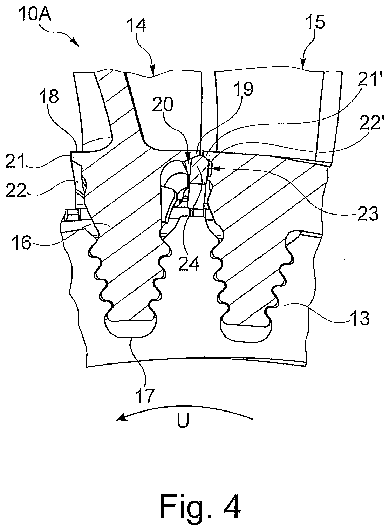

Die Fig. 2 bis Fig. 4 zeigen einen Ausschnitt der exemplarisch beschriebenen Rotorvorrichtung 10A in Alleinstellung, welche eine erste Stufe der Hochdruckturbine 8 bildet. Die Rotorvorrichtung 10A ist mit einem zentral angeordneten und mit einer Hochdruckwelle 12 verbundenen Scheibenrad 13 ausgeführt, an welchem in radial äußeren Bereichen umfangsseitig eine Vielzahl von Laufschaufeln 14, 15 angeordnet sind, von denen in Fig. 2 bis Fig. 4 zwei in Umfangsrichtung U der Rotorvorrichtung 10A benachbart angeordnete Laufschaufeln 14 und 15 ersichtlich sind. Die Laufschaufeln 14, 15 sind vorliegend baugleich ausgeführt und weisen jeweils einen in Fig. 3 und Fig. 4 näher ersichtlichen und als Tannenbaumfuß ausgebildeten Schaufelfuß 16 auf, über welchen die Laufschaufeln 14, 15 in bekannter Weise jeweils in dem Scheibenrad 13 verlaufenden und mit den tannenbaumförmigen Schaufelfüßen 16 korrelierenden Aufnahmebereichen 17 des Scheibenrads 13 angeordnet sind, wobei die Aufnahmebereiche 17 sich im Wesentlichen im definierten Profil in axialer Richtung A der Rotorvorrichtung 10A bzw. des Strahltriebwerks 1 erstrecken.

Wie in Fig. 3 und Fig. 4 ersichtlich ist, sind die Laufschaufeln 14, 15 - in radial auswärtiger Richtung R der Rotorvorrichtung 10A betrachtet - unterhalb von Schaufelplattformen 18 in einem ersten in Umfangsrichtung U der Rotorvorrichtung 10A weisenden Randbereich 19, 19' mit einer Ausnehmung 20 und in einem zweiten, dem ersten Randbereich 19, 19' in Umfangsrichtung U der Rotorvorrichtung 10A abgewandten Randbereich 21, 21' mit einer weiteren Ausnehmung 22, 22' ausgeführt, wobei in an dem Scheibenrad 13 montiertem Zustand der Laufschaufeln 14, 15 die Ausnehmung 20 der Laufschaufel 14 der weiteren Ausnehmung 22' der Laufschaufel 15 zugewandt ist.

Die angrenzenden Ausnehmungen 20, 22' der benachbarten Laufschaufeln 14, 15 bilden einen Hohlraum 23, welcher auch als Dämpfertasche bezeichnet wird. In dem Hohlraum 23 ist eine Dämpfungseinrichtung 24, ein sogenannter Zwischenplattformdämpfer, angeordnet. Die Dämpfungseinrichtung 24 ist vorgesehen, um im Betrieb der Rotorvorrichtung 10A bzw. des Strahltriebwerks 1 insbesondere in radialer Richtung R der Rotorvorrichtung 10A auftretende und beispielsweise durch stromauf der Laufschaufeln 14, 15 angeordnete Leitschaufeln angeregte Schwingungen und/oder Vibrationen der Laufschaufeln 14, 15 zu dämpfen und dabei Schwingungsamplituden zu reduzieren und Resonanzfrequenzen zu optimieren.

Neben der Dämpfung von Schwingungen und Vibrationen kann auch ein sekundäres Luftsystem sowie eine Schaufelplattformkühleffizienz verbessert werden, indem die Dämpfungseinrichtung 24 eine Sichtlinie bzw. einen Spalt zwischen dem Scheibenrad 13 und der jeweiligen Laufschaufel 14 bzw. 15 verhindert bzw. eine Eintrittsfläche verringert wird. Prinzipiell kann mit der Dämpfungseinrichtung 24 auch ein Spalt zwischen zwei benachbarten Laufschaufeln abgedichtet werden und der Wirkungsgrad des Strahltriebwerks 1 insgesamt optimiert werden.

In Fig. 2 und Fig. 4 ist die Dämpfungseinrichtung 24 jeweils in einer Position während eines Betriebs des Strahltriebwerks 1 ersichtlich, wobei die Dämpfungseinrichtung 24 durch die dabei wirkende Zentrifugalkraft in Umfangsrichtung U der Rotorvorrichtung 10A zwischen der Ausnehmung 20 der ersten Laufschaufel 14 und der weiteren Ausnehmung 22' der angrenzenden Laufschaufel 15 zentriert ist.

Die Fig. 3 zeigt die Dämpfungseinrichtung 24 in einer Montageposition, in der die Laufschaufeln 14, 15 auf einfache und schnelle Weise an dem Scheibenrad 13 montiert werden können. Die Dämpfungseinrichtung 24 ist hierbei vollständig innerhalb der Ausnehmung 20 der ersten Leitschaufel 14 angeordnet, so dass die Laufschaufeln 14, 15 von der Dämpfungseinrichtung 24 nicht behindert in die jeweiligen Aufnahmebereiche 17 der Schaufelradeinrichtung 13 eingeführt werden können.

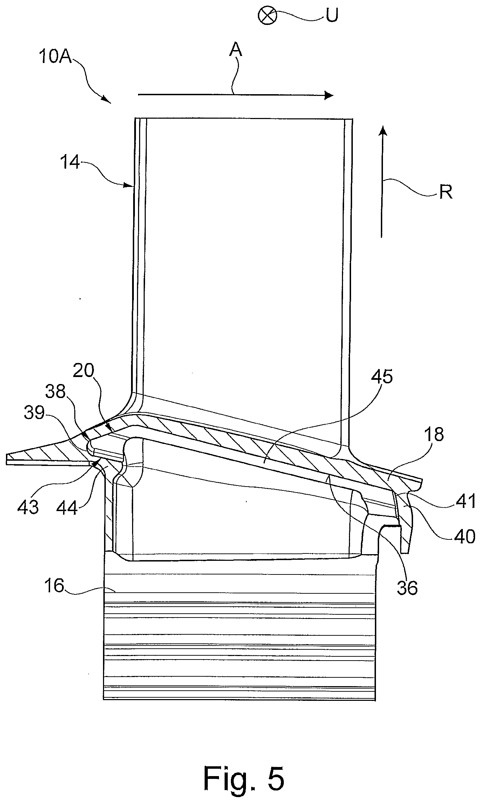

Der hierbei zugrunde liegende Mechanismus wird im Folgenden anhand der detaillierteren Darstellungen in den Fig. 5 bis Fig. 8 näher erläutert.

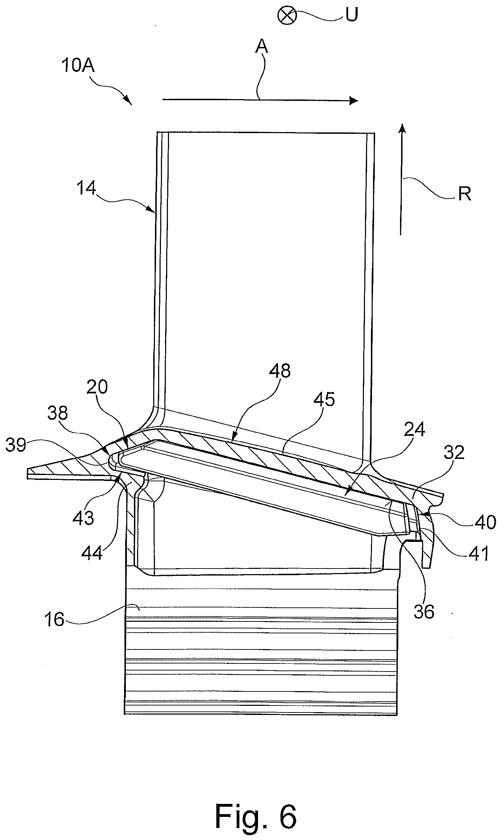

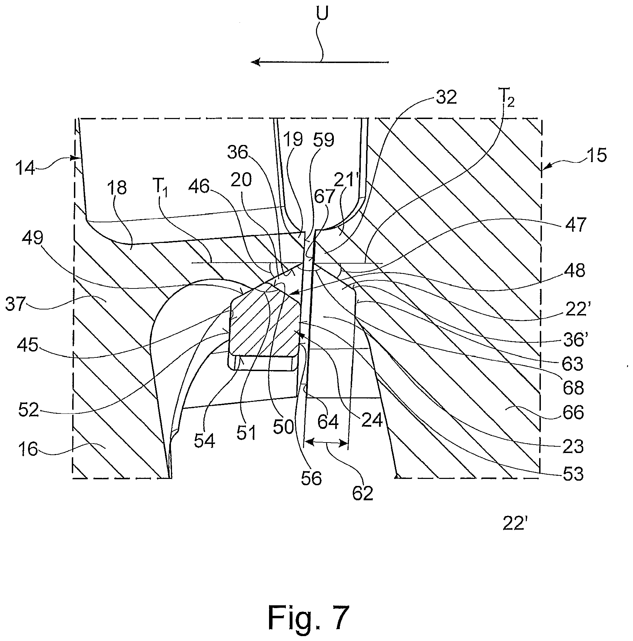

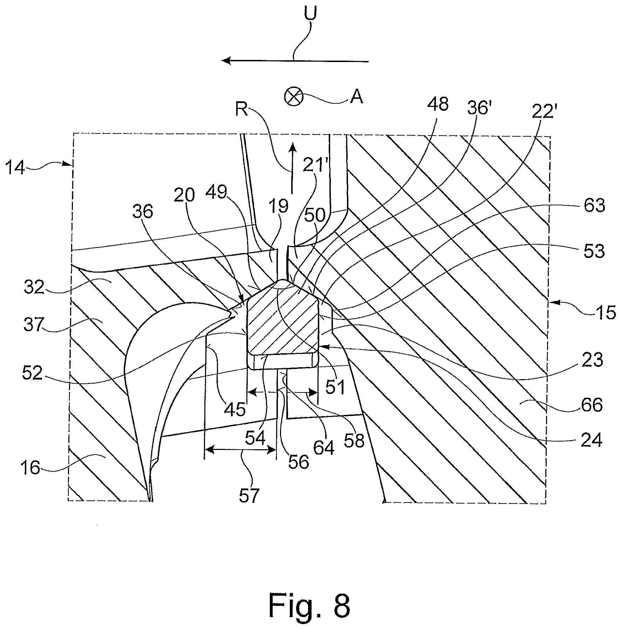

In Fig. 5 und Fig. 6 ist jeweils eine Seitenansicht der ersten Laufschaufel 14 der Rotorvorrichtung 10A gezeigt, die in radialer Richtung R der Rotorvorrichtung 10A unterhalb der Schaufelplattform 18 eine Ausnehmung 20 aufweist, die - wie in Fig. 6 ersichtlich - zur vollständigen Anordnung der Dämpfungseinrichtung 24 während der Montage ausgeführt ist. Die Ausnehmung 20 ist in radialer Richtung R der Rotorvorrichtung 10A nach außen durch eine insbesondere in Fig. 7 und Fig. 8 ersichtliche Führungsfläche 36 begrenzt, die vorliegend insgesamt im Wesentlichen plan ausgeführt ist. Im Querschnitt gemäß Fig. 7 und Fig. 8 ist die Führungsfläche 36 gegenüber einer Tangente T1 zur Umfangsrichtung U der Rotorvorrichtung 9 im Bereich des ersten Randbereichs 19 der Laufschaufel 14 um einen Winkel 46 von vorliegend etwa 30° derart geneigt, dass der Verlauf der Führungsfläche 36 radial in Richtung des Schaufelfußes 16 ausgehend von dem ersten Randbereich 19 in Richtung eines in Umfangsrichtung U mittigen Bereichs 37 der Laufschaufel 14 kontinuierlich geneigt ist.

In axialer Richtung A der Rotorvorrichtung 10A ist die Ausnehmung 20 in einem ersten axialen Endbereich 38 durch eine erste Wandung 39 und in einem dem ersten axialen Endbereich 38 gegenüberliegenden zweiten axialen Endbereich 40 durch eine zweite Wandung 41 begrenzt. Die Ausnehmung 20 ist vorliegend in axialer Richtung A der Rotorvorrichtung 10A geringfügig länger als der Schaufelfuß 16.

Es ist weiterhin eine Sicherungseinrichtung 43 vorgesehen, über welche die Dämpfungseinrichtung 24 in radialer Richtung R der Rotorvorrichtung 29 entgegen einer Bewegung nach innen gesichert ist. Die Sicherungseinrichtung 43 weist vorliegend in dem ersten axialen Endbereich 38 eine Wandung 44 auf, auf der die Dämpfungseinrichtung 24 aufliegt, beispielsweise wenn sie sich gemäß Fig. 6 in ihrer Montageposition befindet. Die Wandung 44 ist vorliegend Teil der ersten Laufschaufel 14 und ist integral mit dieser ausgebildet. Die Sicherungseinrichtung 43 ist im Bereich des zweiten axialen Endbereichs 40 von einer nicht näher ersichtlichen Einrichtung zur Sicherung der Laufschaufel 30 in axialer Richtung A der Rotorvorrichtung 10A gebildet, die im Bereich einer Nut mit der Laufschaufel 14 zusammenwirkt. Die Dämpfungseinrichtung 24 liegt in der Montageposition im zweiten axialen Endbereich 40 auf der geeigneten Einrichtung auf, so dass ein Bewegungsraum der Dämpfungseinrichtung in radialer Richtung R der Rotorvorrichtung 10A begrenzt ist.

In Umfangsrichtung U der Rotorvorrichtung 10A ist die Ausnehmung 20 durch eine Seitenfläche 45 begrenzt, die direkt an die Führungsfläche 36 grenzt. Die Seitenfläche 45 erstreckt sich dabei in axialer Richtung A der Rotorvorrichtung 10A bzw. des Strahltriebwerks 1 über die gesamte Länge der Ausnehmung 20.

Die vorliegend vereinfacht dargestellte Dämpfungseinrichtung 24 weist, wie in der Querschnittsansicht gemäß Fig. 7 und Fig. 8 deutlich ersichtlich, einen in radialer Richtung R der Rotorvorrichtung 29 nach außen weisenden dachartigen bzw. dachförmigen Bereich 48 auf, der mit zwei Wirkflächen 49, 50 ausgeführt ist. Die Wirkflächen 49 und 50 sind vorliegend in montiertem Zustand der Dämpfungseinrichtung 24 in axialer Richtung A jeweils im Wesentlichen plan ausgeführt, wobei die Wirkflächen 49, 50 miteinander einen Winkel 51 von vorliegend etwa 120° einschließen. Eine erste Wirkfläche 49 der Dämpfungseinrichtung 35 ist dabei zum Zusammenwirken mit der Führungsfläche 36 der Ausnehmung 20 vorgesehen.

Die Dämpfungseinrichtung 24 weist vorliegend weiterhin zwei Seitenflächen 52, 53 auf, von denen eine erste Seitenfläche 52 in montiertem Zustand der Dämpfungseinrichtung 24 der Seitenfläche 45 der Ausnehmung 20 zugewandt ist. In einem in radialer Richtung R der Rotorvorrichtung 29 nach innen weisenden Bereich ist die Dämpfungseinrichtung 24 durch eine Bodenfläche 54 begrenzt, mit der die Dämpfungseinrichtung 24 in der Montageposition auf der Wandung 44 und gegebenenfalls der Einrichtung der Sicherungseinrichtung 43 aufliegt.

Die Dämpfungseinrichtung 24 und die Ausnehmung 20 der ersten Laufschaufel 14 sind hinsichtlich der jeweiligen Formgebung derart aneinander angepasst, dass die Dämpfungseinrichtung 24 gemäß Fig. 7 zur Montage der Rotorvorrichtung 10A vollständig in der Ausnehmung 20 angeordnet werden kann. Die Ausnehmung 20 wird dabei in radialer Richtung R der Rotorvorrichtung 29 nach außen durch die Führungsfläche 36 und nach innen durch die Sicherungseinrichtung 43, axial nach innen gerichtet durch die erste Wandung 39 und die zweite Wandung 41 und in Umfangsrichtung U der Rotorvorrichtung 10A einerseits durch die Seitenfläche 45 und andererseits durch eine Begrenzungfläche bzw. -ebene 56 begrenzt, die eine seitliche Begrenzungsfläche des ersten Randbereichs 19 der ersten Laufschaufel 14 zur zweiten Laufschaufel 15 hin definiert.

Eine Breite 57 der Seitenflanke bzw. Ausnehmung 20 ist dabei in jedem Querschnitt größer als die entsprechende Breite 58 der Dämpfungseinrichtung 24 oder gleich der Breite 58 der Dämpfungseinrichtung 24, wobei die Breite 57 der Ausnehmung 20 hier um einen den gewünschten Toleranzen entsprechenden Wert größer als die Breite 58 abzüglich des minimal auftretenden Plattformzwischenspaltes 59 in Umfangsrichtung der Dämpfungseinrichtung 24 ist. Mithin ist die Breite 58 der Dämpfungseinrichtung 24 kleiner als die Breite der Seitenflanke bzw. Ausnehmung 20 zuzüglich der Breite des Spaltes 59 und der gegebenen Toleranzen. Sowohl die Dämpfungseinrichtung 24 als auch die Ausnehmung 20 weisen vorliegend in axialer Richtung A der Rotorvorrichtung 10A eine im Wesentlichen konstante Breite 57 bzw. 58 auf, wobei die erste Seitenfläche 52 der Dämpfungseinrichtung 24 und die Seitenfläche 45 der Ausnehmung 20 im Wesentlichen in zueinander parallel verlaufenden Ebenen liegen, die sich in axialer Richtung A und in radialer Richtung R der Rotorvorrichtung 10A erstrecken.

In Fig. 7 und Fig. 8 ist ersichtlich, dass die an die Ausnehmung 20 der ersten Laufschaufel 14 grenzende und den Hohlraum 23 bzw. die Dämpfertasche bildende Ausnehmung 22' der angrenzenden zweiten Laufschaufel 15 vorliegend in Umfangsrichtung U eine Breite 62 aufweist, die kleiner als die Breite 57 der Ausnehmung 20 der ersten Laufschaufel 14 ist. Die Breite 62 der weiteren Ausnehmung 22' der zweiten Laufschaufel 15 wird dabei vergleichbar zu der Ausnehmung 20 der ersten Laufschaufel 14 von einer Seitenfläche 63 und einer Randfläche bzw. Begrenzungebene 64 definiert, die vergleichbar zu Begrenzungsebene 56 der ersten Laufschaufel 14 eine plane seitliche Begrenzungsfläche der Schaufelplattform der zweiten Laufschaufel 15 zur ersten Laufschaufel 14 hin definiert.

Entsprechend der Ausnehmung 20 der ersten Laufschaufel 14 weist auch die weitere Ausnehmung 22' der zweiten Laufschaufel 15 eine plan ausgeführte Führungsfläche 36' auf, die zum Zusammenwirken mit der zweiten Wirkfläche 50 der Dämpfungseinrichtung 24 ausgeführt ist. Die Führungsfläche 36' der zweiten Laufschaufel 15 bildet zusammen mit der Führungsfläche 36 der ersten Laufschaufel 14 eine Kontur in der Art eines Schrägdaches, wofür die Führungsfläche 36' der zweiten Laufschaufel 15 von dem Randbereich 21' in Richtung eines mittigen Bereichs 66 der Laufschaufel 15 abgeschrägt ist. Auch die Führungsfläche 36' der zweiten Laufschaufel 15 ist im Querschnitt gemäß Fig. 7 und Fig. 8 gegenüber einer Tangente T2 zur Umfangsrichtung U im Bereich ihres zweiten, der ersten Laufschaufel 14 zugewandten Randbereichs 21' um einen Winkel 47 von etwa 30° geneigt. Die Führungsflächen 36, 36' der die Dämpfertasche 23 bildenden Ausnehmungen 20, 22' schließen somit miteinander einen Winkel 68 von etwa 120° ein.

Um die Rotorvorrichtung 10A zu montieren, wird die Dämpfungseinrichtung 24 zunächst gemäß Fig. 6 und Fig. 7 in ihre Montageposition gebracht, in der die Dämpfungseinrichtung 24 vollständig innerhalb der Ausnehmung 20 der ersten Laufschaufel 14 angeordnet ist. Hierdurch ist sichergestellt, dass die Laufschaufeln 14, 15 unabhängig voneinander im Wesentlichen in axialer Richtung A der Rotorvorrichtung 10A in die Aufnahmebereiche 17 des Scheibenrads 13 eingeführt werden können, ohne dass die Dämpfungseinrichtung 24 in Kontakt mit der angrenzenden Laufschaufel 15 kommt. Die Dämpfungseinrichtung 24 wird dabei durch die Sicherungseinrichtung 43 in radialer Richtung R der Rotorvorrichtung 10A nach innen gesichert, und ein Verkeilen der Dämpfungseinrichtung 24 während der Montage ist sicher verhindert. Nach der Laufschaufel 14 können alle weiteren jeweils ebenfalls mit einer Dämpfungseinrichtung 24 versehenen Laufschaufeln jeweils separat in die jeweils vorgesehenen Aufnahmebereiche 17 des Scheibenrads 13 eingeführt werden. Auf ein Werkzeug kann hierbei vorteilhafterweise verzichtet werden.

Im Betrieb der Rotorvorrichtung 10A bzw. des Strahltriebwerks 1 wird die Dämpfungseinrichtung 24 durch die Zentrifugalkraft mit ihrer ersten Wirkfläche 49 entlang der Führungsfläche 36 der Ausnehmung 20 der ersten Laufschaufel 14 in Richtung ihres Randbereichs 19 bewegt, bis die Dämpfungseinrichtung 24 zusätzlich mit ihrer zweiten Wirkfläche 50 an der Führungsfläche 36' der angrenzenden Ausnehmung 22' der benachbarten Laufschaufel 15 anliegt und die Dämpfungseinrichtung 24 in den Ausnehmungen 20 und 22' zentriert ist. Beim Stillstand der Rotorvorrichtung 10A, d. h. wenn keine ausreichende Zentrifugalkraft auf die Dämpfungseinrichtung 24 wirkt, fällt diese radial nach unten bzw. innen, so dass die Dämpfungseinrichtung auf der Sicherungseinrichtung 43 der ersten Laufschaufel 14 und einer vergleichbaren Sicherungseinrichtung der angrenzenden Laufschaufel 15 aufliegt.

Dadurch, dass die Ausnehmungen 20 und 22' jeweils im Bereich des ersten axialen Endbereichs 38 eine größere Erstreckung als im Bereich des zweiten axialen Endbereichs 40 aufweisen, wird die Dämpfungseinrichtung 24 zudem durch die im Betrieb auf diese wirkende Zentrifugalkraft in Richtung des ersten axialen Endbereichs 38 gedrückt, so dass in diesem Bereich eine große Anpressung und hierdurch gegebenenfalls ein gute Abdichtung erzielbar ist.

### Bezugszeichenliste

- 1: Flugtriebwerk
- 2: Nebenstromkanal
- 3: Einlaufbereich
- 4: Bläser
- 5: Triebwerkskern
- 6: Verdichtereinrichtung
- 7: Brenner
- 8: Hochdruckturbine
- 9: Niederdruckturbine
- 10A, 10B, 10C, 10D, 10E: Rotorvorrichtung
- 12: Hochdruckwelle
- 13: Scheibenrad
- 14, 15: Laufschaufel; Laufschaufel
- 16: Schaufelfuß
- 17: Aufnahmebereich
- 18: Schaufelplattform
- 19, 19': erster Randbereich der Laufschaufel
- 20: Ausnehmung
- 21, 21': zweiter Randbereich der Laufschaufel
- 22, 22': weitere Ausnehmung
- 23: Hohlraum, Dämpfertasche
- 24: Dämpfungseinrichtung
- 36, 36': Führungsfläche der Ausnehmung
- 37: mittiger Bereich der Laufschaufel
- 38: erster axialer Endbereich der Ausnehmung
- 39: erste Wandung
- 40: zweiter axialer Endbereich der Ausnehmung
- 41: zweite Wandung
- 43: Sicherungseinrichtung
- 44: Wandung
- 45: Seitenfläche der Ausnehmung
- 46: Winkel
- 47: Winkel
- 48: dachförmiger Bereich der Dämpfungseinrichtung
- 49: erste Wirkfläche der Dämpfungseinrichtung
- 50: zweite Wirkfläche der Dämpfungseinrichtung
- 51: Winkel
- 52: erste Seitenfläche der Dämpfungseinrichtung
- 53: zweite Seitenfläche der Dämpfungseinrichtung
- 54: Bodenfläche der Dämpfungseinrichtung
- 56: Randebene
- 57: Breite der Ausnehmung
- 58: Breite der Dämpfungseinrichtung
- 59: Plattformzwischenspalt
- 62: Breite der weiteren Ausnehmung
- 63: Seitenfläche der weiteren Ausnehmung
- 64: Randebene
- 66: mittiger Bereich der Laufschaufel
- 68: Winkel
- A: axiale Richtung
- R: radiale Richtung
- T1, T2: Tangente
- U: Umfangsrichtung

## Patentansprüche

1. Rotorvorrichtung (10A, 10B, 10C, 10D, 10E) eines Flugtriebwerks (1) mit einem Scheibenrad (13) und wenigstens zwei hieran angeordneten, aneinander grenzenden Laufschaufeln (14, 15), und mit wenigstens einer Dämpfungseinrichtung (24), die im Betrieb in radialer Richtung (R) und zumindest bereichsweise in Umfangsrichtung (U) der Rotorvorrichtung (10A bis 10E) unterhalb einer Schaufelplattform (18) der Laufschaufeln (14, 15) und innerhalb eines Hohlraums (23) zwischen den Laufschaufeln (14, 15) angeordnet ist, wobei der Hohlraum (23) durch jeweils eine Ausnehmung (20, 22, 22') an den angrenzenden Laufschaufeln (14, 15) gebildet ist, wobei jede der Ausnehmungen (20, 22, 22') eine in radialer Richtung (R) der Rotorvorrichtung (10A bis 10E) äußere Führungsfläche (36, 36') aufweist, mit denen die Dämpfungseinrichtung (24) im Betrieb der Rotorvorrichtung (10A bis 10E) zusammenwirkt, wobei die jeweilige Führungsfläche (36, 36') ausgehend von einem in Umfangsrichtung (U) der Rotorvorrichtung (10A bis 10E) seitlichen Randbereich (19, 19', 21, 21') der Laufschaufel (14, 15) hin zu einem mittigen Bereich (37, 66) der Laufschaufel (14, 15) einen Verlauf radial in Richtung des Scheibenrades (13) aufweist, und wobei sich die jeweilige Ausnehmung (20, 22, 22') in Umfangsrichtung (U) der Rotorvorrichtung (10A bis 10E) von einer durch den seitlichen Randbereich (19, 19', 21, 21') der Laufschaufel (14, 15) definierten Begrenzungsebene (56, 64) bis zu einer die Führungsfläche (36, 36') zur Laufschaufelmitte hin begrenzenden Seitenfläche (45, 63) erstreckt, **dadurch gekennzeichnet, dass** die von der Führungsfläche (36, 36'), der Begrenzungsebene (56, 64) und der Seitenfläche (45, 63) begrenzte Ausnehmung (20, 22') wenigstens einer der aneinander grenzenden Laufschaufeln (14, 15) zur vollständigen Aufnahme der Dämpfungseinrichtung (24) ausgeführt ist, und dass die Dämpfungseinrichtung (24) im Querschnitt einen dachartigen Bereich (48) mit zwei Wirkflächen (49, 50) aufweist, von denen jeweils eine Wirkfläche (49) im Betrieb der Rotorvorrichtung (10A bis 10E) mit einer der Führungsflächen (36, 36') der Laufschaufeln (14, 15) zusammenwirkt.

2. Rotorvorrichtung nach Anspruch 1, **dadurch gekennzeichnet, dass** eine Sicherungseinrichtung (43) vorgesehen ist, welche bei montierter Dämpfungseinrichtung (24) zumindest bereichsweise in radialer Richtung (R) der Rotorvorrichtung (10A bis 10E) betrachtet unterhalb der Dämpfungseinrichtung (24) angeordnet ist.

3. Rotorvorrichtung nach Anspruch 2, **dadurch gekennzeichnet, dass** zumindest ein Teil (44) der Sicherungseinrichtung (43) durch wenigstens eine der Laufschaufeln (14, 15) gebildet ist und/oder zumindest ein Teil der Sicherungseinrichtung (43) ein separates Bauteils ist, das mit wenigstens einer der Laufschaufeln (14, 15) in Wirkverbindung bringbar ist.

4. Rotorvorrichtung nach einem der Ansprüche 1 bis 3, **dadurch gekennzeichnet, dass** die Ausnehmung (20) zur vollständigen Aufnahme der Dämpfungseinrichtung (24) in axialer Richtung (A) der Rotorvorrichtung (10A bis 10E) eine im Wesentlichen der axialen Erstreckung der Dämpfungseinrichtung (24) entsprechende Länge aufweist.

5. Rotorvorrichtung nach Anspruch 1, **dadurch gekennzeichnet, dass** die Wirkflächen (49, 50) der Dämpfungseinrichtung (24) im Querschnitt einen Winkel von etwa 120° miteinander einschließen.

6. Rotorvorrichtung nach einem der Ansprüche 1 bis 5, **dadurch gekennzeichnet, dass** wenigstens eine der Führungsflächen (36, 36') in einem Querschnitt in Umfangsrichtung (U) der Rotorvorrichtung (10A bis 10E) betrachtet gerade ausgeführt ist.

7. Rotorvorrichtung nach einem der Ansprüche 1 bis 6, **dadurch gekennzeichnet, dass** die Führungsfläche (36, 36') im Querschnitt mit einer Tangente (T1, T2) zur Umfangsrichtung (U) der Rotorvorrichtung (10A bis 10E) einen Winkel (46, 47) von etwa 30° einschließt.

8. Rotorvorrichtung nach einem der Ansprüche 1 bis 7, **dadurch gekennzeichnet, dass** die Führungsfläche (36, 36') der Ausnehmung (20) zur vollständigen Aufnahme der Dämpfungseinrichtung (24) in einem ersten in axialer Richtung (A) der Rotorvorrichtung (10A bis 10E) liegenden Endbereich (38) eine größere radiale Erstreckung als in einem dem ersten Endbereich (38) gegenüberliegenden zweiten Endbereich (40) der Ausnehmung (20) aufweist.

9. Rotorvorrichtung nach einem der Ansprüche 1 bis 8, **dadurch gekennzeichnet, dass** die Führungsfläche (36, 36') der Ausnehmung (20, 22') der Laufschaufel (14, 15) und/oder die Dämpfungseinrichtung (24) in axialer Richtung (A) der Rotorvorrichtung (10A bis 10E) gerade oder gekrümmt ausgeführt ist.

10. Rotorvorrichtung nach einem der Ansprüche 1 bis 9, **dadurch gekennzeichnet, dass** eine Breite (58) der Dämpfungseinrichtung (24) und/oder eine Breite (57) der Ausnehmung (20, 22') betrachtet in axialer Richtung (A) der Rotorvorrichtung (10A bis 10E) im Wesentlichen konstant ist oder variiert.

11. Rotorvorrichtung nach einem der Ansprüche 1 bis 10, **dadurch gekennzeichnet, dass** wenigstens eine Seitenfläche (52, 53) der Dämpfungseinrichtung (24) und/oder die Seitenfläche (45, 63) der Ausnehmung (20, 22') bezüglich der axialen Richtung (A) der Rotorvorrichtung (10A bis 10E) gerade oder gekrümmt ausgeführt ist.

12. Rotorvorrichtung nach einem der Ansprüche 1 bis 11, **dadurch gekennzeichnet, dass** die Seitenfläche (45, 63) der Ausnehmung (20, 22') der Laufschaufel (14, 15) in axialer Richtung (A) der Rotorvorrichtung (10A bis 10E) wenigstens annähernd einer Form einer im Betrieb dieser zugewandten Seitenfläche (52) der Dämpfungseinrichtung (24) entspricht.

## Claims

1. Rotor apparatus (10A, 10B, 10C, 10D, 10E) of an aircraft engine (1) having a disc wheel (13) and at least two rotor blades (14, 15) which are arranged thereon and adjoin one another, and having at least one damping device (24) which, during operation, is arranged in the radial direction (R) and at least in regions in the circumferential direction (U) of the rotor apparatus (10A to 10E) below a blade platform (18) of the rotor blades (14, 15) and within a cavity (23) between the rotor blades (14, 15), the cavity (23) being formed by way of in each case one recess (20, 22, 22') on the adjoining rotor blades (14, 15), each of the recesses (20, 22, 22') having an outer guide face (36, 36') in the radial direction (R) of the rotor apparatus (10A to 10E), with which the damping device (24) interacts during operation of the rotor apparatus (10A to 10E), wherein the respective guide face (36, 36') is extending, starting from a lateral edge region (19, 19', 21, 21') of the rotor blades (14, 15) in the circumferential direction (U) of the rotor apparatus (10A to 10E) towards a central region (37, 66) of the rotor blades (14, 15), radially in the direction of the disc wheel (13), and wherein the respective recess (20, 22, 22') is extending in the circumferential direction (U) of the rotor apparatus (10A to 10E) from a boundary plane (56, 64) which is defined by the lateral edge region (19, 19', 21, 21') of the rotor blade (14, 15) a side face (45, 63) which delimits the guide face (36, 36') towards the rotor blade centre, **characterized in that** the recess (20, 22') of at least one of the mutually adjoining rotor blades (14, 15), which recess (20, 22') is delimited by the guide face (36, 36'), the boundary plane (56, 64) and the side face (45, 63), is configured for completely receiving the damping device (24), and **in that** the damping device (24) has a roof-like region (48) in cross section with two active faces (49, 50), of which in each case one active face (49) interacts during operation of the rotor apparatus (10A to 10E) with one of the guide faces (36, 36') of the rotor blades (14, 15).

2. Rotor apparatus according to Claim 1, **characterized in that** a securing device (43) is provided which, in the case of an assembled damping device (24), is arranged at least in regions below the damping device (24) as viewed in the radial direction (R) of the rotor apparatus (10A to 10E).

3. Rotor apparatus according to Claim 2, **characterized in that** at least one part (44) of the securing device (43) is formed by way of at least one of the rotor blades (14, 15), and/or at least one part of the securing device (43) is a separate component which can be brought into an operative connection with at least one of the rotor blades (14, 15).

4. Rotor apparatus according to one of Claims 1 to 3, **characterized in that**, for completely receiving the damping device (24) in the axial direction (A) of the rotor apparatus (10A to 10E), the recess (20) has a length which corresponds substantially to the axial extent of the damping device (24).

5. Rotor apparatus according to Claim 1, **characterized in that** the active faces (49, 50) of the damping device (24) enclose an angle of approximately 120° with one another in cross section.

6. Rotor apparatus according to one of Claims 1 to 5, **characterized in that** at least one of the guide faces (36, 36') is of straight configuration in a cross section as viewed in the circumferential direction (U) of the rotor apparatus (10A to 10E).

7. Rotor apparatus according to one of Claims 1 to 6, **characterized in that** the guide face (36, 36') encloses an angle (46, 47) of approximately 30° in cross section with a tangent (T1, T2) to the circumferential direction (U) of the rotor apparatus (10A to 10E).

8. Rotor apparatus according to one of Claims 1 to 7, **characterized in that**, in order to completely receive the damping device (24), the guide face (36, 36') of the recess (20) has a greater radial extent in a first end region (38) which lies in the axial direction (A) of the rotor apparatus (10A to 10E) than in a second end region (40) of the recess (20), which second end region (40) lies opposite the first end region (38).

9. Rotor apparatus according to one of Claims 1 to 8, **characterized in that** the guide face (36, 36') of the recess (20, 22') of the rotor blade (14, 15) and/or the damping device (24) are/is of straight or curved configuration in the axial direction (A) of the rotor apparatus (10A to 10E).

10. Rotor apparatus according to one of Claims 1 to 9, **characterized in that** a width (58) of the damping device (24) and/or a width (57) of the recess (20, 22') is substantially constant or varies as viewed in the axial direction (A) of the rotor apparatus (10A to 10E).

11. Rotor apparatus according to one of Claims 1 to 10, **characterized in that** at least one side face (52, 53) of the damping device (24) and/or the side face (45, 63) of the recess (20, 22') are/is of straight or curved configuration with regard to the axial direction (A) of the rotor apparatus (10A to 10E).

12. Rotor apparatus according to one of Claims 1 to 11, **characterized in that** the side face (45, 63) of the recess (20, 22') of the rotor blade (14, 15) corresponds in the axial direction (A) of the rotor apparatus (10A to 10E) at least approximately to a shape of a side face (52) of the damping device (24), which side face (52) faces the said side face (45, 63) during operation.

## Revendications

1. Dispositif formant rotor (10A, 10B, 10C, 10D, 10E) d'un propulseur (1), le dispositif formant rotor comprenant une roue à disque (13) et au moins deux pales (14, 15) adjacentes, montées sur la roue à disque, et au moins un moyen d'amortissement (24) qui est disposé en fonctionnement, dans la direction radiale (R) et au moins en partie dans la direction circonférentielle (U) du dispositif formant rotor (10A à 10E), au-dessous d'une plate-forme (18) des pales (14, 15) et à l'intérieur d'une cavité (23) ménagée entre les pales (14, 15), la cavité (23) étant formée par un évidement (20, 22, 22') au niveau de chacune des pales adjacentes (14, 15), chacun des évidements (20, 22, 22') comportant une surface de guidage (36, 36') extérieure par référence à la direction radiale (R) du dispositif formant rotor (10A à 10E), lesquelles surfaces de guidage coopèrent avec le moyen d'amortissement (24) pendant le fonctionnement du dispositif formant rotor (10A à 10E), la surface de guidage respective (36, 36') ayant une extension radiale en direction de la roue à disque (13), depuis une région de bord (19, 19', 21, 21') de la pale (14, 15), qui est latérale par référence à la direction circonférentielle (U) du rotor (10A à 10E), vers une région centrale (37, 66) de la pale (14, 15), et l'évidement respectif (20, 22, 22') s'étendant dans la direction circonférentielle (U) du dispositif formant rotor (10A à 10E) depuis un plan de délimitation (56, 64) défini par la région de bord latéral (19, 19', 21, 21') de la pale (14, 15) jusqu'à une surface latérale délimitant la surface de guidage (36, 36') en direction du centre de pale (45, 63), **caractérisé en ce que** l'évidement (20, 22') d'au moins une des pales adjacentes (14, 15), lequel évidement est délimité par la surface de guidage (36, 36'), le plan de délimitation (56, 64) et la surface latérale (45, 63), est ménagé de façon à recevoir complètement le moyen d'amortissement (24) et **en ce que** le moyen d'amortissement (24) comporte en coupe transversale une région de type toit (48) comportant deux surfaces actives (49, 50) dont une surface active (49) coopère avec une des surfaces de guidage (36, 36') des pales (14, 15) pendant le fonctionnement du dispositif formant rotor (10A à 10E).

2. Dispositif formant rotor selon la revendication 1, **caractérisé en ce qu'**un moyen de fixation (43) est prévu, lequel est disposé au moins en partie, vu dans la direction radiale (R) du dispositif formant rotor (10A à 10E), au-dessous du moyen d'amortissement (24) lorsque le moyen d'amortissement (24) est monté.

3. Dispositif formant rotor selon la revendication 2, **caractérisé en ce qu'**au moins une partie (44) du dispositif de fixation (43) est formée par au moins une des pales (14, 15) et/ou au moins une partie du dispositif de fixation (43) est un composant séparé qui peut être relié fonctionnellement à au moins une des pales (14, 15).

4. Dispositif formant rotor selon l'une des revendications 1 à 3, **caractérisé en ce que** l'évidement (20) destiné à recevoir complètement le moyen d'amortissement (24) a, dans la direction axiale (A) du dispositif formant rotor (10A à 10E), une longueur correspondant sensiblement à l'extension axiale du moyen d'amortissement (24).

5. Dispositif formant rotor selon la revendication 1, **caractérisé en ce que** les surfaces actives (49, 50) du moyen d'amortissement (24) forment entre elles un angle d'environ 120° en coupe transversale.

6. Dispositif formant rotor selon l'une des revendications 1 à 5, **caractérisé en ce qu'**au moins une des surfaces de guidage (36, 36') est réalisée, en coupe transversale, de manière rectiligne, vu dans la direction circonférentielle (U) du dispositif formant rotor (10A à 10E).

7. Dispositif formant rotor selon l'une des revendications 1 à 6, **caractérisé en ce que** la surface de guidage (36, 36') forme, en coupe transversale, un angle (46, 47) d'environ 30° avec une tangente (T1, T2) à la direction circonférentielle (U) du dispositif formant rotor (10A à 10E).

8. Dispositif formant rotor selon l'une des revendications 1 à 7, **caractérisé en ce que** la surface de guidage (36, 36') de l'évidement (20), destiné à recevoir complètement le moyen d'amortissement (24), a une extension radiale dans une première une région d'extrémité (38) située dans la direction axiale (A) du dispositif formant rotor (10A à 10E), qui est plus grande que celle dans une deuxième région d'extrémité (40), opposée à la première partie d'extrémité (38), de l'évidement (20).

9. Dispositif formant rotor selon l'une des revendications 1 à 8, **caractérisé en ce que** la surface de guidage (36, 36') de l'évidement (20, 22') de la pale (14, 15) et/ou le moyen d'amortissement (24) sont réalisés de manière rectiligne ou incurvée dans la direction axiale (A) du dispositif formant rotor (10A à 10E).

10. Dispositif formant rotor selon l'une des revendications 1 à 9, **caractérisé en ce que** la largeur (58) du moyen d'amortissement (24) et/ou la largeur (57) de l'évidement (20, 22') sont sensiblement constantes ou varient lorsque l'on observe dans la direction axiale (A) du dispositif formant rotor (10A à 10E).

11. Dispositif formant rotor selon l'une des revendications 1 à 10, **caractérisé en ce qu'**au moins une surface latérale (52, 53) du moyen d'amortissement (24) et/ou la surface latérale (45, 63) de l'évidement (20, 22') sont réalisées de manière rectiligne ou incurvée par rapport à la direction axiale (A) du dispositif formant rotor (10A à 10E).

12. Dispositif formant rotor selon l'une des revendications 1 à 11, **caractérisé en ce que** la surface latérale (45, 63) de l'évidement (20, 22') de la pale (14, 15) correspond, dans la direction axiale (A) du dispositif formant rotor (10A à 10E), au moins approximativement à la forme d'une surface latérale (52) du moyen d'amortissement (24) qui est dirigée en fonctionnement vers celle-ci.
